# EUROPEAN PATENT APPLICATION

(11) **EP 1 555 064 A1**
(43) Date of publication of application: **20.07.2005**
(21) Application number: 05100298.8
(22) Date of filing: 19.01.2005
(51) Int. Cl.: B01J 35/00, B01J 37/02, B01J 37/34, C02F 1/32, C02F 1/72

(54) **Photocatalytic membrane, process for its production and use thereof**

(30) Priority: 19.01.2004 IT MI20040058
(71) Applicant: BELLOBONO INNOVATIVE TECHNOLOGIES S.R.L., 20121 MILANO (IT)
(72) Inventor: STEFANELLI, Maria Letizia, 20124, MILANO (IT)
(74) Representative: Gervasi, Gemma, Dr.

(57) **Abstract**

The present invention relates to a microporous photocatalytic membrane, suitable for the photochemical degradation of both organic and inorganic compounds, containing at least one semiconductor/ photocatalyst, at least one photopromoter and at least one photosensitizer and supported on the surface of a metallic and/or glass and/or ceramic and/or polymeric microporous support.

## Description

The present invention relates to photocatalytic membranes suitable for the photodegradation and/or complete photomineralization of pollutants in aqueous or gaseous media.

### STATE OF THE ART

Waste management problems are nowadays exacerbated by two factors: quantity and toxicity. Waste quantities have steadily increased due to population growth and, perhaps more significantly, because the specific waste generation rates continue to increase, particularly in developed and industrial countries. Pollution by hazardous organic and inorganic wastes has become an important issue, due to their toxicity potential. More than twenty years ago, the U.S. Environmental Protection Agency (EPA) had already identified over one hundred organic chemicals as priority pollutants (U.S. Office of Technology Assessment, Washington, D.C., Government Printing Office, 1983). Contamination of the aquatic environment with insecticides, pesticides, and chemicals in general, particularly with chloro-organics, is causing increasing concern, as it was twenty years ago (J. Long, Chem. Eng. News, vol. 62(5), 20,(1984) ). Even water, which is initially free of organo-chlorine compounds, can become polluted with these during the chlorination process, as a result of reaction between naturally occurring humic and fulvic acids and chlorine itself, if potabilization is carried out by this method.
The effectiveness of heterogeneous photocatalysis for the total oxidation of organic and halo-organic water contaminants has been thoroughly investigated, for a long time, both scientifically and technologically (M. Schiavello (ed.), "Photocatalysis and Environment. Trends and Applications", NATO ASI Ser.C, vol. 237, Kluwer, Dordrecht (1988); N. Serpone and E. Pelizzetti (eds.) "Photocatalysis. Fundamentals and Applications", Wiley, New York, (1989); D.W. Tender and F.G. Pohland (eds.), "Emerging Technologies in Hazardous Waste Management", ACS Symp. Ser., vol.422, ACS Washington, D.C., (1990): I.R. Bellobono, "Photosynthetic Membranes in Industrial Waste Minimization and Recovery of Valuable Products", in "Membrane Technology: Applications to Industrial Wastewater Treatment", Kluwer Acad. Publ., Dordrecht, The Netherlands (1995); I.R. Bellobono and L. Righetto, "Photochemical Production of Composite Membranes and Reinforced Plastics", in "Radiation Curing in Polymer Science and Technology", vol. 4, Elsevier Science Publ., Barking, Essex, UK (1993); I.R. Bellobono, Ital. Pat. 1.189.074; I.R. Bellobono, Ital. Pat. 01.237.084; I.R. Bellobono, Ital. Pat. 1.256.303 ).
Photochemically based degradation processes belong substantially to four main classes:
a) Processes employing only UV irradiation, without oxidizing agents or photocatalysts;
b) Processes employing UV and/or visible irradiation in the presence of oxidizing agents, such as hydrogen peroxide, ozone, and so on;
c) Processes as b), in which soluble photocatalysts or addition agents are employed to increase reaction rates and the decomposition of oxidizing agents into fast reacting radical species,
d) Processes employing photocatalysts insoluble in the reaction medium, mainly titanium dioxide suspensions, possibly also in combination with b). All of these processes show some distinct disadvantages:

1) Process a) is normally very slow, mainly due to low optical absorption or reversible photophysical reactions of absorbing species. As a matter of fact, it has never become an industrial process from the point of view of photodegradation.
2) Process b) is also moderately slow, mainly due to low molar absorptivities of oxidizing species. It possesses, consequently, many drawbacks for being adopted technologically on a large scale, and with acceptably high efficiencies, unless some catalytic compounds are added, able to increase decomposition of oxidizers into fast reacting radical species.
3) Process c), as a matter of fact, has begun to receive some industrial attention. It possesses, however, several particular drawbacks, such as the low absorptivity of oxidizers shown by process b) and the necessity of cleaning continuously the quartz walls of the UV lamp containers, due to frequent deposition of tarry and polymeric products on the highly irradiated parts of the reaction vessel. Addition of granular sorbents may remove the latter difficulty, but requires, as a counterpart, a continuous filtration system, which adds remarkable costs, optical problems, due to absortion and scattering by these sorbents, apart.
4) Process d) is also attractive, but it still retains burdensome inconveniences given by non homogeneous light absorption by suspended semiconductors, leading also to difficulties in design of photo reactors, as well as by the necessity of a costly continuous filtration of semiconductor photocatalyst, and by the need of a frequent semiconductor regeneration, given the rate of its inactivation by deposition of tarry products, due to high gradients of light intensity on the suspended particles themselves. Consequently, it is not a candidate for industrial development. Even if the semiconductor would be immobilized by physical adsorption, as it has been demonstrated (N. Serpone, E. Borgarello, R. Harris, P. Cahill, M. Borgarello and E. Pelizzetti, Solar Energy Mater., vol. 14, 121, (1986); R.W. Matthews, J.Phys.Chem., vol.91, 3328, (1987); H. AI-Ekabi and N. Serpone, J.Phys.Chem., vol. 92, 5726, (1988) ), the thin layers of it would create problems of low absorption, while the substrate would certainly be liable to interfere optically, and design of photo reactor would still involve many problems, together with inactivation of photocatalyst, and a high cost for its preparation and regeneration.

All the drawbacks above could be removed by manufacturing and using photocatalytic membranes onto which the semiconductor / photocatalyst is immobilized by means of a photochemical technology (I.R. Bellobono and L. Righetto, "Photochemical Production of Composite Membranes and Reinforced Plastics", in "Radiation Curing in Polymer Science and Technology", vol. 4, Elsevier Science Publ., Barking, Essex, UK (1993); I.R. Bellobono, Ital. Pat. 1.256.303). These membranes can be prepared by a procedure based on photografting and photopolymerisation of a blend containing the appropriate semiconductor / photocatalyst and suitable monomers and/or prepolymers, in the presence of a particular photoinitiating system. This system, fully described in the literature cited above, uses at least one organo-metallic compound, in which the central atom is coordinated to the central atom by at least one element chosen among C, N, P, As, Sb, O, S, Se, Te, B, and/or uninegative simple ions, such as hydride, fluoride, chloride, bromide, iodide, together with a photosensitizer and/or photoinitiator of some type known as such in the scientific and technological literature. This process is absolutely necessary in the technological procedure of membrane manufacture, because, in the presence of huge amounts of titanium dioxide, absorbing the ultraviolet radiation, no photografting and no photopolymerization could take place by using only conventional photoinitiators, in times so short as those which are needed to carry out the process (with longer times, and with slower polymerization procedures, the greatest part of the active surface of semiconductor would be lost). Membranes immobilizing up to about 40% of semiconductor (typically titanium dioxide) may be prepared by the process above, so that all drawbacks and inconveniences of procedures a)-d) are integrally removed. The photocatalytic membrane technology has recently been recognized as one of the best, if not absolutely the best, technology, both as regards efficiencies and engineering (Dijkstra et al., AlChE Journal, 734 (2003)).

This notwithstanding, these membranes still show some limitations, due to their partly polymeric composition in the irradiated layers. Particularly these membranes show a limited resistance to photodegradation during their use, and need to be removed periodically and substituted by new membranes.

### SUMMARY OF THE INVENTION

The present inventor has now found that it is possible to prepare by photografting photocatalytic membranes possessing microporosity as a distinctive feature, as well as to immobilize on said photocatalytic membranes photopromoting species able to enhance greatly the activity of traditional photocatalysts. Furthermore, contrarily to the membranes of the prior art described above, these membranes do not show any problem connected to degradation of polymeric components, and are consequently indefinitively resistant to ultraviolet radiation.

### DETAILED DESCRIPTION OF THE INVENTION

A first object of the present invention are microporous photocatalytic membranes able to degrade photochemically both organic and inorganic pollutants containing at least one semiconductor / photocatalyst, at least one photopromoter and at least one photosensitizer and supported on the surface of a conveniently chosen metallic and/or glass and/or ceramic and/or polymeric support.
The membranes of the invention are formed by photographting of their different components on the surface of the microporous support.
The semiconductor / photocatalyst is preferably selected from the group consisting of titanium dioxide, zinc oxide, tin dioxide, and cadmium sulfide. Among these molecules, particular preference is given to titanium dioxide. The known "drawback" of titanium dioxide is represented by its inability to "harvest" energy in the visible; this drawback can be obviated and partly compensated by the use of the photopromoters described in the present application.
The photopromoter and photosensitizer above may be two different substances or the same substance, the latter in the case, frequently met, that the photopromoter molecule also acts as a photosensitizer.
According to a preferred embodiment of the present invention, the membrane of the invention is formed by two layers, the first containing at least one semiconductor / photocatalyst and the second containing at least one semiconductor / photocatalyst, at least one photopromoter and at least one photosensitizer, the first layer being immobilised on the surface of the microporous support.
The supporting structure may be a compact layer or a fibrous layer, if fibres possessing adequate morphology and diameter are used, such as a fibre mat having a suitable porosity. Full or hollow fibres, and also textile fibres, may be used.

According to a preferred embodiment of the present invention, when the support is a metal, this may be stainless steel, aluminum, titanium, or their alloys.
Contrarily to the previous generation membranes, constituted by a polymeric network into the pores of which photocatalyst and its additives were incorporated (I.R. Bellobono, et al., Journal of Membrane Science, vol 102, pages 139-147 (1995); I.R. Bellobono, et al. Fresenius Environmental Bulletin, vol. 7, pages 277-288 (1998); I.R. Bellobono, et al., Fresenius Environmental Bulletin, vol. 12, pages 1535-1544 (2003), all these membranes being manufactured by the technology described in Ital. Pat. 1.256.303 cited above), in the new membranes described in the present application the photocatalyst and its additives form a microporous membrane on a supporting structure, obtained by photografting of its different components onto the surface of the supporting structure itself.
By microporous membrane it is meant a membrane having a porosity ranging from 0.2 to 10 µm.
The membrane of the present invention is produced by a nanotechnology based on photografting, which is entirely different from that used in EP 0876907A2 (1998), or described by K.H. Wang et al. (Journal of Hazardous Materials, vol. B95, pages 161-174 (2002)).
The photographted layers afford a continuous permeability through the microporous membrane these layers behave as true membrane layers, possessing all the properties of a reactive membrane, throughout their whole thickness.
This is not observed with the membranes produced with the technologies of the prior art that do not produce a membrane structure and wherein, owing to the absence of a true membrane structure, the supported photocatalysts in these devices are strongly rate limited by adsorption and desorption.
Consequently the membrane of the present invention are able to increase reactivity by at least one order of magnitude, if not two, with respect to the best reactivity values reached by the membranes described in recent literature (K.H. Wang et al., Journal of Hazardous Materials, vol B85, pages 161-174 (2002) ) making use of more or less compact layers of photocatalyst, but far from possessing a true membrane structure, such as that of the membranes described in the present Patent.
Furthermore, the membranes of the present invention also obviate the drawbacks deriving from photodegradation of the polymeric component of the membrane of Ital. Pat. 1.256.303 cited above, because they do not contain any polymeric and/or photodegradable component. Furthermore, even when the supporting layer is a polymer, the membranes of the invention do not show any photodegration problems concerning the polymer, since this latter is protected by a layer that absorbs the whole impinging radiation. Polymeric materials of practically any kind and shape may thus also be used, as supports, or composite polymeric materials, with reinforcing agents such as glass fibres, ceramic fibres, carbon fibres, or textile materials and so on, of practically any kind, woven and non-woven.
A further object of the present invention is a procedure to prepare the photocatalytic membranes, characterized by the following steps:
1) When using metallic supports, onto which photocatalysts are immobilized, their surface needs first to be oxidized. Particularly, the supporting structure is prepared by the known techniques of micro - sand blasting, degreasing, pickling. Afterwards, an oxidation takes place, extended to a thickness of 100-200 nm, by using known technologies, such as thermal, electrochemical, or plasma treatment oxidation. When, on the contrary, glass, or ceramic or polymeric supports are employed, either in compact form or in fibre form, only sand blasting, followed by degreasing and thorough washing, is used, to proceed further to step 2).
2) On the treated metallic, glass, ceramic or polymeric surface, a layer of semiconductor nanopowder, preferably 25-250 nm thick, is then deposited, by using CVD (chemical vapour deposition) or plasma techniques.
3)The surface is then maintained in a controlled atmosphere of oxygen enriched air, with 25-90%, but preferably 50-60%, oxygen, in the presence of saturated water vapour, at a temperature between 30° and 90°C, preferably 60-70°C, during 2-36 hours, preferably 24-26 hours. This treatment allows to fully hydrate the surface oxides, by transforming them into hydroxides, to form a morphologically porous microstructure, adhering to the support. The presence of hydroxide groups onto the surface is a stringent condition for further treatments.
4) The surface is then sprayed or otherwise deposited with an organic solvent suspension containing:
   a) the semiconductor / photocatalyst. When using titanium dioxide its quantity may range from 0.15 to 150 g per m² of support;
   b) A photoinitiating system, preferably that described in European Patent Application EP 0421512, herewith attached as a reference. This system contains:
      *i*) At least one photoinitiator. This is preferably selected from those listed in the above European Patent Application. Preferably, said photoinitiator is an organometallic compound in which the central atom is coordinated to the central atom by at least one element selected from the group consisting of C, N, P, As, Sb, O, S, Se, Te, B and uninegative simple ions such as hydride floride, chloride bromide and iodide.
      *ii*) At least one photosensitizer, preferably selected from those listed in the above European Patent Application. By photosensitizer, following the present invention, a photochemically active species is meant, able to increase efficiency of photoinitiator, even at wavelengths different from those corresponding to the optical absorption spectrum of photoinitiator. Said photosensitizer is described in their use and applications by I.R. Bellobono, Ital. Pat. 01.237.084; I.R. Bellobono, Ital. Pat. 1.256.303, and in European Patent Application EP 0421512, herewith attached as a reference.
         The term "photoinitiator", in the context of the present application refers to a photochemically active species, able to produce radicals, when irradiated at wavelengths corresponding to those of its optical absorption spectrum.
      *iii*) A photopromoting system. The term "photopromoter", in the context of the present application refers, to photochemically active species able to harvest energy at wavelengths different from those of semiconductor / photocatalyst, to which this energy is transmitted by antenna effect. Some examples of photopromoters, according the present invention are the following:
         (I) = Peroxo-bis[N,N'-ethylene-bis(salicylideneiminato) cobalt(III)]
         (II) = Peroxo-bis[N,N'-ethylene-bis(salicylideneiminato) dimethylformamide cobalt(III)]
         (III) = Triethylvanadate(V)
         (IV) = Oxo-(diquinolyloxo) vanadic(V) acid
         (V) = Tris-(phenylsilyl) vanadium(V)
         (VI) Synergic mixture of tri-(*t*-butyl) and tri(*i*-propyl) vanadate(V)
         (VII) = Iron(III) potassium oxalate.
   The presence of photopromoters is indispensable in order that the semiconductor may "harvest" energy in the visible, besides its positive effects on quantum yields. In the presence of photopromoters, quantum yields are much higher than in its absence, owing also to its hindering the hole - electron recombination in the irradiated semiconductor.
   Preferably the photoinitiating system is added in an amount ranging optimally between 5-6% with respect to that of the semiconductor, while the photopromoting system has a threshold effect at an amounts of at least 0.01% with respect to that of the semiconductor, and an optimal effect at an amount between 7-15% with respect to that of the semiconductor, depending on chemical nature of photopromoter.
   The suspension to be sprayed described above has to be prepared in a suitable organic solvent, preferably constituted by a mixture of aromatic, alkyl aromatic, or aliphatic hydrocarbons, with a number of carbon atoms from 6 to 8, by adding semiconductor and its additives (photoinitiators, photosensitizers, and photopromoters), and by controlling rheological properties of the suspension, in such a way as to be able to use, for example, aerographic spraying to deposit on the surface of the supporting structure 250 nm - 100 µm of this suspension.
5) The layer is then irradiated by a photonic flux of 0.05 - 0.1 Einstein/min, during 0.1 - 5 min, as described in Italian Patents cited above, by using a continuous UV curing unit, equipped with adequate ventilation, and an absorption system, to absorb volatile organic compounds present in the suspension, and to eliminate them rapidly and efficiently from the surface of the microporous membrane resulting. By irradiation, a convenient oxygen bridged structure results, by exploiting everywhere the antenna effect of photopromoters.

Besides immobilization of semiconductor photocatalyst, and added photocatalytic system, in a reliable optically absorbing structure, which is able to remove all difficulties and drawbacks of processes a)-d), and in particular of processes b)-d) particularly, additional advantages may be provided by membrane processes employing the photocatalytic membranes of the invention:
1) the possibility of immobilizing in the membrane structure also dye photosensitizers, particularly when operating with photocatalysts such as titanium dioxide which possess a fairly large band gap and consequently a very limited ability for harvesting the solar energy spectrum (this is the role played by the added photopromoting system above, which increases harvesting ability of semiconductor, extending it in the visible range of the spectrum);
2) the possibility of using metallic supports, for example titanium and its alloys, commercially available, to create on them microporous membranes, without employing, as in preceding Italian Patents, photoactive organic monomers or prepolymers, these latter leading to a partially polymeric structure subject to photochemical degradation, while the membranes manufactured by the method described in the present Patent possess an unlimited resistance to photodegradation;
3) the possibility of modelling the most appropriate type of photoreactor by appropriately choosing the membrane geometry (from plane to tubular membranes, to hollow fibres, and so on, any possible configuration being feasible), and taking benefit from the very high surface-volume ratio in membrane reactors;
4) the possibility of adding, during the manufacture of photocatalytic membranes, suitable photopromoters, able to increase up to 30-40 times the photocatalytic efficiency, particularly when as an oxygen donor, instead of molecular oxygen, hydrogen peroxide is employed, or ozone, which may be easily dissolved in solutions to be treated by using commercial ozonizers. The action of photopromoters towards ozone is very efficient and able to produce, both photochemically and chemically, and at room temperature, labile (radical) oxygen species, which rapidly destroy organic contaminants, by the same mechanism which occurs, at very high temperatures, in traditional flames.

This technology is consequently able to increase enormously traditional rate of photocatalytic processes, and even that allowed by photocatalytic membranes of previous Patents cited above. These new photocatalytic membranes allow the use of high frequency radiation, less than 220 nm, down to 180 nm, as no degradation of the photocatalytic membrane is possible, as it occurred in previous partly polymeric membranes. Moreover, photopromoting systems are very active at these high ultraviolet frequencies, particularly in the presence of oxygen donors such as ozone.
Thus, another object of the present invention is a method for photocatalytically degrading, by UV or visible radiation, organic and inorganic pollutants and/or for inducing self-cleaning properties onto any kind of surface, comprising the use of a photocatalytic membrane as claimed in claimes 1-8 in the presence of atmospheric oxygen or of an oxygen donor.

The rates of mineralization of organic contaminants allowed by the present invention, as a matter of fact, are able to receive further enhancement, both in the visible, and in the ultraviolet irradiation, if oxygen donors such as hydrogen peroxide or ozone are used. This constitutes an additional object of the present Patent, in the ability of these new membranes to reach and overcome the already recognized excellent performance of the composite photocatalytic membranes, prepared following the known art of previous Patents cited above.

Photodegradation process employing photocatalytic membranes occurs on the surface area of immobilized photocatalyst, on which species to be degraded are adsorbed, during their permeation through the membranes. Irradiation gives rise to hydroxyl radicals' production from water on the same semiconductor and photocatalyst particles. Turbulence conditions have to be assured, anyway, in order to facilitate reactivity, while the pressure gradient facilitates flow. Strictly speaking, no oxidizing species would be necessary in this process, if hole/electron couples generated on the semiconductor surface, by irradiation, would be able to give, by reaction with water, hydroxyl radicals on one side and elemental hydrogen on the other: unfortunately, while the first transformation occurs with relatively high efficiency, the latter is unfavoured on titanium dioxide, if not assisted chemically or electrochemically. The presence of oxidizing species (dissolved oxygen itself) is, therefore, necessary in order that reaction with free electrons may lead to dioxygen radical anion or its conjugate acid, which further contribute to the oxidative degradation of substrates. Consequently, with photocatalytic membranes, it is possible, and also convenient, to operate in the presence of oxidizing species (typically dissolved oxygen, or ozone, or hydrogen peroxide). When operating with hydrogen peroxide, for example, no addition of reagent or catalyst able to create hydroxyl radicals from hydrogen peroxide is needed, because, in the presence of photocatalytic membranes immobilizing titanium dioxide and other photocatalysts, these latter are able to convert catalytically the oxidizing agent into fast reacting hydroxyl and/or peroxo radicals. For this same reason no excess of hydrogen peroxide remains in processed solution as its photochemical, photocatalyzed decomposition proceeds rapidly. Photocatalytic decomposition of oxidizing agents by membranes is, otherwise, the mechanism by which the beneficial action of these agents may be explained in the photocatalytic process of the present invention.
Photocatalytic degradation, as is already known, transforms carbon and hydrogen of organic pollutants into carbon dioxide and water, while , if the organics contain halogen, sulfur, phosphorus, and nitrogen these are tranformed respectively to halide, sulphate, phosphate, and nitrate or ammonium ions. Also some inorganic pollutants, particularly low oxidation state anions, are oxidized very rapidly by hydroxyl radicals to the upper oxidation state, thus obtaining non pollutant ions: thus sulphide and sulphites yield sulphates, while cyanide ions are photodegraded into carbon dioxide and ammonium ions.

As photocatalysts may be immobilized by photografting in a variety of supports, as stated above, an enormous flexibility results. With ceramic supports, for instance, of whatever shape and dimension, a photoreactor able to operate at relatively high temperatures, up to 150-160°C and higher, may be manufactured. The chemical bonds, realized by the photografting technique, between the membrane and its support offer mechanical stability and adhesion. This further leads to fairly long life for membranes. Besides this, replacement of exhausted membranes in the photoreactor, when periodically needed, is an extremely easy and rapid operation, the membranes being conveniently assembled in compact modules.

A further object of the present invention is represented by photoreactors employing the photocatalytic membranes described. Any kind of photoreactor, in principle, may be used for operation with photocatalytic membranes described in the present invention. We shall indicate, anyway, a particular application, which must not be considered as a limitation of all the numerous possibilities offered by this technique. This photoreactor is substantially an annular photoreactor. In this kind of reactor, two coaxial cylinders delimit the reaction zone, while the lamp is placed on the symmetry axis. This simple geometry allows modelling of the radiation field. The outer shell is constituted by a metallic mirror; as a consequence, practically all photons emitted by the lamp reach the reacting medium. Instead of metals, also plastic materials may be employed to construct the outer shell, provided the inner surface is metallized mirror-like and conveniently protected. The annular photoreactor mounting photocatalytic membranes may be used either in a continuous process, or in a batch process, by entirely recirculating the processed solution, or with partial recycling of the same solution. Stirring of reservoirs, if needed, may be accomplished mechanically or by ultrasounds. The main hydrodynamic condition is that of assuring turbulence of the processed solution, mechanically and/or ultrasonically, besides providing the pressure drop necessary for permeation of fluid through the membranes. Turbulence is needed to assure efficiency of adsorption and desorption processes of pollutants, onto and from catalyst immobilized within the membrane pores, which are the mechanistic requisites of photocatalytic processes.

In photoreactor above photocatalytic membranes may be placed both coaxially with the lamp and on UV transparent baffles, e.g. helicoidally respect to the lamp itself, in order to exploit conveniently the radiation field. Any other configuration, of course, may be used, following specific requirements. Baffles may also be metallic or plastic, in the form of highly perforated discs or grids, in order to minimize radiation absorption. The membrane can be even photografted to the baffles themselves. Besides baffles, also UV transparent rings, or saddles, or bodies of any other shape may be employed as membrane supports, and even photografted with membranes.
In the case of continuous reactors, the flow inside the reactor may be arranged in such a way that the solution being processed crosses the reactor length more than once. This has the advantage that all the fluid elements are brought, at least once, into the highly irradiated region close to the inner reactor wall.

Configuration above is typical for processing solutions or emulsions. Due to the enormous flexibility of the photodegradation process based on photocatalytic membranes, however, also aerosol or vapour processes are possible at relatively high temperatures, in the latter case by immobilizing photocatalysts onto metal or ceramic supports, as stated above.

When dealing with solutions and/or emulsions, these latter need not to be necessarily aqueous. Also non aqueous solvents may be employed, supposing definite amounts of water may be added to the system, to provide for the photocatalysed water splitting into hydroxyl radicals, and supposing the solvent is relatively photo stable, or at least rate of its photodegradation is fairly less than that of the components to be photodegraded primarily.

Another peculiar characteristic of the method of the present invention deserves to be underlined. With UV based hydrogen peroxide processes, as cited above in "the state of the art" paragraph, lamp containers and highly irradiated zones become coated with tarry products, which soon reduce drastically the irradiation efficiency, and need to be removed continuously, for example with suspended sorbents or with appropriate cleaning devices. No such behaviour is observed with photocatalytic membranes, because photodegradation reaction, and also decomposition of oxidizing agents, if present, into oxidizing radicals, occurs very efficiently onto the membrane surface without giving rise to tarry products. Consequently no cleaning device or similar is necessary.
In the method of the invention the radiation source is a lamp emitting UV or UV and visible radiation selected from fluorescent lamps, mercury vapour, doped mercury vapour arc lamps, halogen lamps and solar lamps

The most utilized lamps, as radiation sources, are arc lamps with mercury vapours: medium or high pressure devices are the most useful for the process of the present invention. Doping of lamps is useful, in order to reach high intensities in the high energy area of the UV spectrum, if agents such as ozone or hydrogen peroxide are also added during processing. The visible zone of emission spectrum of these lamps may be also conveniently exploited by the process of the present invention, because of the presence of photosensitizers and photocatalysts absorbing in this zone. Any other radiation source meeting these requirements may also be used, with no limitation. Radiation power has to be chosen most conveniently between 80 and 130 W/cm; but also lower radiative powers may be employed, down to 0.2-0.3 W/cm, and in the latter case with much greater quantum efficiencies.

Photocatalytic membranes of the present invention may be used in processes intended to produce drinking water from natural resources, as the photocatalytic treatment is able to remove even any anthropic contamination, such as that of chloro-organics, or agricultural chemicals. As a finishing procedure, this technology may be used to produce ultra pure water (down to 0.1 ppb of total organic carbon, TOC) for microelectronics, as well for pharmaceutical use (injectables and so on), for this application the photopromoting system to be added to the photocatalyst being supported onto anodized titanium or titanium alloys.

An application of the method of the present invention is the removal by photomineralisation or photodegradation of of micro- and macro- organic pollutants in waste waters of whatever kind. Preferably, in this application the method of the invention is coupled with at least another chemical, physico-chemical, or biological treatment process, especially when massive amounts of pollutants are present. Among the biological treatments, active sludge procedures are the best candidates to be coupled with photocatalytic membrane processes. Another treatment process that may be coupled with the method of the invention is a treatment process makes also use of composite polymeric membranes, immobilizing reagents, and/or sorbents, these membranes being manufactured by photografting, and photopolymerization.
In the above application, the photodegradation of the micro- and macro- pollutants may be only partial. For example, if waste waters contain non biodegradable, toxic chemicals, which may not be fed to an active sludge plant, a pre-treatment with photocatalytic, partially photodegrading said pollutants, membranes may induce integral biodegradability, by transforming the toxic chemicals into fully biodegradable intermediates, which may be further degraded in a traditional and economically convenient active sludge plant.

It is also possible to couple the photocatalytic method of the invention, using photocatalytic membranes described in the present application, with traditional membrane methods, to reach simultaneous separations, such as selective separation of some components, recovery of valuable components, water reuse by reverse osmosis, and so on.
A further application is given by the use of photocatalytic membranes for mineralization of organic contaminants in air, for example for purification of air in air conditioning plants, or for purification of gaseous emissions from volatile organic compounds of whatever kind.

Besides applications indicated in the following examples, which in no way should be considered as limitative, and besides applications already and generally mentioned in the text, virtually any organic compound may be photodegraded and photomineralized completely, by the process of the present invention, provided the suitable photopromoter to accompany titanium dioxide is chosen appropriately. Also many inorganic pollutants, particularly low oxidation state anions, as reported above, and as will be shown in the examples, may be degraded by the method described here.

### EXAMPLE 1

### Photodegradation of chloro-aliphatics by membranes immobilizing titanium dioxide, without any other promoting photocatalyst, on a laboratory scale.

Disc membranes (6 cm diametre) immobilizing 25-35 wt.% of titanium dioxide alone, without any other photocatalytic system, were sandwiched through O-rings between optical pyrex plates transmitting from 300-310 up to longer wavelength in order to cut off radiations shorter than 300 nm, which could cause a direct photochemical transformation of the halo-organics tested. The optical plates carried an inlet and an outlet tube, on one side and on the other respectively, in order that solutions to be irradiated could circulate continuously from and to a gas-tight reservoir from which samples could be withdrawn for analytical determinations. Air was not excluded from the reservoir gas space. The distance between the optical plate and the membrane was 2 mm and the ratio between the overall reacting volume (in the photoreactor and in the reservoir) and the apparent, geometrical membrane surface area of the irradiated side was 1.1 mL/cm². The cell was irradiated with 2.5 mW/cm², simulating the UV portion of the solar spectrum. Temperature was thermostatted at 30°C. By Langmuir-Hinshelwood treatment of experimental data, the following initial rates of photodegradation have been obtained.

| Halo-organic compound | Initial rate of photodegradation (micromoles/h) (*) |
|---|---|
| Trichloroethene | 5.9 |
| Tetrachloroethene | 5.7 |
| Monochloroacetic acid | 5.6 |
| Dichloroacetic acid | 5.9 |
| Trichloroacetic acid | 6.2 |

| | |
|---|---|
| (*) mean of at least 6 kinetic runs (max deviation 0.6 micromoles/h) | |

As predicted by kinetic models (see references of literature on photocatalysis cited above), all based on hydroxyl attack of the organic reagent, hydroxyl radicals being considered as the primary oxidant in the photocatalytic system, initial rates of degradation result substantially independent of the reactants, being dependent only on concentration of photocatalyst and radiation intensity.

### EXAMPLE 2

Influence of hydrogen peroxide concentration on photodegradation of trichloroethene in aqueous solution either in the presence or in the absence of photocatalytic membranes immobilizing titanium dioxide alone without any other promoting photocatalytic system, on a laboratory scale.

These experiments were carried out in the same conditions of example 1, with the only difference that different amounts of hydrogen peroxide were added, starting from the stoichiometric one. The following values of initial rate of photodegradation were obtained, by the method cited in example 1.

| Ratio between the amount of Initial rate of degradation of hydrogen peroxide added and the trichloroethene (micromoles/h) (*) stoichiometric amount | |
|---|---|
| 1.0 | 14 (3) (**) |
| 2.0 | 22 (4) |
| 3.0 | 28 (5) |
| 4.0 | 36 (7) |
| 5.0 | 41 (6) |
| 6.0 | 39 (6) |
| 8.0 | 42 - |
| 10.0 | 41 (8) |

| | |
|---|---|
| (*) maximum standard deviation : 2 micromoles/h | |
| (**) Values between parentheses refer to measurements in the absence of the photocatalytic membranes | |

In these same experimental conditions, the photodegradation rates were also measured in the absence of the photocatalytic membranes. These latter values too are reported in the Table above, between parentheses.

Two facts readily emerge from the data of the Table above. The presence of hydrogen peroxide increases markedly the photo degradation rate only in the presence of the photocatalytic membrane: a plateau is reached at about a concentration equal to five times the stoichiometric one, and the increase in rate is about seven-fold in these conditions. On the contrary, the action of hydrogen peroxide alone is rather scarce and practically equal to that of the photocatalytic membrane alone, if an amount of hydrogen peroxide at least five-fold or six-fold the stoichiometric one is added. This is not contradictory with reported literature data on the degradation effect of UV + hydrogen peroxide, since in the experimental conditions of example 1, owing to the wavelength range of irradiation spectrum, UV absorption by hydrogen peroxide was really very low or negligible.

To sum up, as may be seen by comparison with results of example 1, the use of hydrogen peroxide together with photocatalytic membranes is very satisfactory.

Results substantially similar with those reported in this example were also obtained with other chloro-aliphatics, such as those studied in example 1. As a matter of fact, rates increase, at a stoichiometric concentration of hydrogen peroxide, from a factor of about 2.4 (for trichloroethene) to a factor of about 3 (for perchlorinated compounds), while at the plateau effect (concentration of hydrogen peroxide equal to about five times the stoichiometric one) increase factor range from about 7 to about 9.

### EXAMPLE 3

Influence of chemical structure and concentration of promoting photocatalysts on rate of photodegradation of trichloroethene by photocatalytic membranes immobilizing titanium dioxide, in the absence of any added oxidizing agent (except than dissolved oxygen), on a laboratory scale.

In this example, the effect of chemical structure and concentration of some photocatalytic/photosensitizing species, such as those cited in the European Patent Appl. EP 0421512, will be reported. Experiments were carried out, on a laboratory scale, in the same conditions as those illustrated in example 1, that is without addition of hydrogen peroxide or any other oxidizing agent to the reacting solution, with the only difference that membranes were prepared technologically, by adding some photocatalysts at different concentration. It should be remembered that the technology (see Patents cited above) for photosynthetic membrane production contemplates already the use of these photocatalysts, as stated above. In the experiments of this example, different kinds and amounts of the photocatalytic systems have been added.

The following initial rates of photodegradation were measured with trichloroethene as substrate, at 30°C, with a series of photocatalysts characterized by the following chemical composition.
(I) = Peroxo-bis[N,N'-ethylene-bis-(salicylideneiminato) cobalt(III)]
(II) = Peroxo-bis[N,N'-ethylene-bis-(salicylideneiminato) dimethylformamide cobalt(III)]
(III) = triethylvanadate(V)
(IV) = oxo-(diquinolyloxo)vanadic(V) acid
(V) = tris-(phenylsilyl)vanadium(V)
(VI) = synergic mixture of tri-(t-butyl)- and tri-(i-propyl)vanadate(V)
(VII) = iron(III) potassium oxalate.

In the following Table concentration of photocatalysts above in the membrane, expressed as wt.% of the photografted layer, will be designated by C.
Initial relative rates of photodegradation of trichloroethene, as a function of concentration C (wt.%) of photocatalysts (I)-(VII) in membranes immobilizing 25-35 wt.% of titanium dioxide. Relative rates reported in this Table are defined as the ratio between the rate measured in the presence of photocatalysts (I)-(VII) and that measured in their absence (see example 1).

| C | (I) | (II) | (III) | (IV) | (V) | (VI) | (VII) |
|---|---|---|---|---|---|---|---|
| 0.01 | 0.95 | 1.05 | 0.91 | 0.89 | 0.88 | 1.15 | 1.04 |
| 0.04 | 0.98 | 0.97 | 0.96 | 0.93 | 0.94 | 1.54 | 0.91 |
| 0.10 | 0.95 | 1.23 | 1.57 | 0.97 | 0.91 | 3.24 | 0.89 |
| 0.25 | 1.15 | 1.13 | 3.51 | 0.85 | 0.87 | 5.37 | 1.59 |
| 0.80 | 1.38 | 1.54 | 8.02 | 0.95 | 1.15 | 9.45 | 3.45 |
| 1.50 | 2.86 | 3.53 | 10.6 | 1.19 | 0.89 | 15.8 | 7.48 |
| 3.50 | 6.97 | 7.28 | 11.9 | 2.23 | 1.21 | 18.3 | 16.2 |
| 5.80 | 8.84 | 9.55 | 12.5 | 4.06 | 1.35 | 20.4 | 21.3 |
| 7.00 | 9.96 | 11.3 | 11.9 | 4.32 | 1.39 | 21.5 | 19.6 |

Results of this Table are self-explanatory and exegetic. Advantages brought about by the different photocatalysts are more or less important. All behaviours, anyway, show a threshold effect, and for some of the reported systems, the influence of photocatalysts is already distinct and observable, beyond the experimental uncertainty, at concentrations as low as 0.01 %, such as for photocatalyst (VI), that is in the same range of concentration in which these photocatalysts are active during photopolymerization and photografting. In general much higher concentrations are needed to reach practical effects, and finally some kind of levelling results with increasing concentration, and a plateau is reached. Effects on rate brought about by photocatalysts (III), (VI), and (VII) are outstanding. Finally, the influence of ligands may be observed by examining the behaviour of photocatalysts (III)-(VI).

### EXAMPLE 4

Photodegradation of tetrachloroethene in aqueous solution, in the presence of five-fold amounts of hydrogen peroxide respect the stoicheiometric one, by photocatalytic membranes immobilizing titanium dioxide and photocatalyst (VI) (see example 3 for its formula), as a function of concentration of this latter in the membranes, on a laboratory scale.

These series of experiments were carried out by using the same conditions as those of example 3, with the only difference that tetrachloroethene was used as substrate (instead of trichloroethene as in data of example 3), that hydrogen peroxide was added at a concentration equal to five times the stoichiometric one, and that photocatalyst (VI) was also added, in varying amounts during the technological preparation of membranes. The following initial rates of photodegradation could be measured.

| Initial rate of degradation of tetrachloroethene (micromoles/h) (*) | Wt.% of photocatalyst (VI) in the photocatalytic membrane |
|---|---|
| 51 | 0.00 |
| 55 | 0.80 |
| 57 | 1.05 |
| 61 | 2.10 |
| 65 | 3.30 |
| 64 | 4.06 |
| 65 | 5.13 |
| 67 | 6.92 |

| | |
|---|---|
| (*) maximum standard deviation: 2 micromoles/h | |

The positive influence of photocatalyst (VI) clearly appears also in the presence of hydrogen peroxide, even if the effect is not so marked as that observed (see data of example 3) in the absence of this oxidizing agent. Again a plateau effect is noticed. From the practical point of view, in conditions of this example a further 27% increase may be gained on the otherwise already high value of rate for this substrate in the presence of the combination UV+photocatalytic membranes+hydrogen peroxide (see example 2) amounting to about 51 micromoles/h.

### EXAMPLE 5

### Influence of radiation intensity on photodegradation by photocatalytic membranes. Study on a laboratory scale.

This study has been carried out on a laboratory scale, by employing the same experimental set-up described in example 1, with the difference, however, that distance of photoreactor from the lamp and power of lamp itself was varied in the various runs, in order to vary radiation intensity in the range from 2.5 mW/cm² ( the value adopted in example 1 to simulate UV intensity of solar spectrum ) to 480 mW/cm² (a value typical of the highest intensities available in the UV range for industrial applications). In all runs, anyway, the UV wavelength range was maintained from 300 nm upwards, in order to discard direct (not catalysed) degradation of substrate by high energy UV radiation. Trichloroethene was used as model of halo-organic to be photodegraded catalytically, in all the runs. In all experiments dealed with in this example, to the trichloroethylene substrate stoichiometric amounts of hydrogen peroxide have been added, so that results obtained have to be compared with data reported in example 2. Results, in the form of initial rate of photodegradation as a function of UV radiation intensity, measured actinometrically, are summarized in the following Table.
Initial rate of photodegradation (referred to apparent, geometric surface area of membranes) of trichloroethene in aqueous solution, at 30°C, by photocatalytic membranes immobilizing 25-35 wt.% of titanium dioxide, without any other photocatalyst, in the presence of stoichiometric amounts of hydrogen peroxide, at various radiation intensities (UV range from 300 to 410 nm).

| Radiation intensity (mW/cm²) | Initial rate of degradation (mol/m².h) |
|---|---|
| 2.5 | 0.00495 (*) |
| 20.3 | 0.122 |
| 36.1 | 0.151 |
| 67.2 | 0.225 |
| 145 | 0.280 |
| 272 | 0.375 |
| 380 | 0.523 |
| 480 | 0.549 |

| | |
|---|---|
| (*) value calculated from datum of example 1, by taking into account the apparent, geometrical surface area of membranes | |

Data of Table above clearly indicate a dependency of rate on square root of radiation intensity, and confirm the general behaviour of this relationship as reported in most existing literature data.

### EXAMPLE 6

### Photodegradation of some inorganic pollutants by photocatalytic membranes, on a laboratory scale.

In the following example some cases of degradation of inorganic pollutants will be dealed with, and specifically photodegradation of sulphide, sulphite and cyanide ions. Experiments have been carried out by the same set-up described in example 1, and employing the irradiation intensity of 2.5 mW/cm². Membranes contained titanium dioxide only, without any other photocatalyst. The following initial rates of photodegradation have been obtained, from experimental data, by the usual Langmuir-Hinshelwood plot.

| Pollutant anion | Initial rate of photodegradation (micromoles/h) |
|---|---|
| sulphide | 3.45 |
| sulphite | 4.33 |
| cyanide | 4.80 |

Data above refer, of course, to the surface area of the 6 cm diametre membrane used in the experimental set-up on the laboratory scale.

### EXAMPLE 7

### Photodegradation experiments with a 10 KW pilot plant operating with a radiation intensity of about 250 mW/cm² in the UV absorption range of photocatalyst, and a UV emission range ranging from about 180 nm upwards. A metallic membrane was employed, in the presence of 7 wt% of photopromoter

Several photodegradation experiments have been carried out with the pilot plant above, in order to compare results with those of the laboratory scale.

First of all, it should be remembered that irradiation conditions of the two devices were different. While in laboratory experiments only photocatalytic degradation was possible, because all of the examined substrates did not show absorption in the UV range of irradiation, in the pilot plant, on the contrary, for substrates absorbing from 180-190 nm to about 300 nm, and for hydrogen peroxide, when used, absorbing at these high frequencies, direct or catalysed photolysis was also possible. This behaviour, of course, must be borne in mind when comparing the two kinds of experiments.

As a general rule, and within the limits of the observations above, results obtained in the pilot plant have never been lower than those of the laboratory scale, and in the case of absorbing substrates, even higher for the reasons explained above.

The efficiency of pilot plant may be observed by examinations of two typical case studies, concerning methylene dichloride as an example of substrate absorbing the UV radiation form 200 nm to lower wavelengths, and trichloroethene as an example of substrate absorbing in the high wavelengths range of operation of pilot plant (higher than 200 nm). In both these cases, degradation rates reported in the following refer to experiments performed in the presence of stoichiometric quantities of hydrogen peroxide.

Interpolated value of initial rate of photodegradation for methylene dichloride, considered practically equal to that of the other chloro-organics tested (see example 2 and comments to experimental findings of example 1), at 250 mW/cm², from data on a laboratory scale: 0.41 moles/m² h, which becomes 3.9 moles/m² h, when comparison is made with data of example 3, that is in the presence of photopromoting system, and at the same concentration used in example 3.

Experimental value from pilot plant experiments: 4.60 moles/m² h, slightly higher, for the additive effects due to correct and efficient engineering.

Interpolated value of trichloroethene, directly from experimental measurements on a laboratory scale (see example 5): 0.41 moles/m² h (substantially the same as for dichloromethane, for the reasons recalled above), which becomes 3.8 moles/m² h, if comparison is made in the presence of photopromoter.

Experimental value from pilot plant experiments: 6.3 moles/m² h, fairly greater than that of the laboratory scale measurements, because direct photolysis for this substrate is kinetically more important than photocatalysed degradation, at the high values of radiation fluxes at which experiments have been carried out.

To sum up, results of pilot plant operation are entirely satisfactory, and wholly promising for the photochemical degradation process of the present invention.

### EXAMPLE 8

Photodegradation experiments with a 10 KW pilot plant operating with a radiation intensity of about 250 mW/cm² in the UV absorption range of photocatalyst. Comparison of performance between immobilized and non immobilized phtotocatalyst, in photodegradation of 2, 6-dimethylphenol.

In this example two series of runs were carried out. The first one by operating as described in example 7, with 1 square metre of photocatalytic membrane; the second one by suspending the same amount of photocatalyst in water, that is without any membrane, and by circulating suspended photocatalyst during the run. In all of these runs, 0.001 molar solutions of 2, 6-dimethylphenol were employed as substrates to be photodegraded and amounts of hydrogen peroxide twice the stoichiometric one were always added. The following concentrations were measured as a function of time, in the two series of runs, where concentrations are expressed as percent of substrate remaining unaltered in solution at that time.

| Time (minutes) | Percent of non mineralized substrate in the presence of immobilized photocatalyst | Percent of non mineralized substrate in the presence of suspended photocatalyst |
|---|---|---|
| 1.0 | 79 | 89 |
| 2.0 | 61 | 79 |
| 3.0 | 39 | 77 |
| 4.0 | 28 | 71 |
| 5.0 | 21 | 66 |
| 6.0 | 15 | 59 |
| 7.0 | 12 | 56 |
| 8.0 | 9.5 | 55 |
| 10.0 | 3.1 | 54 |

It may be easily observed that with suspended photocatalyst rate of photodegradation is by far less than that with immobilised photocatalyst, mainly because radiation field is non homogeneous in the presence of the particulate suspension, and radiation losses, that is radiation absorption which does not lead to reactivity, very important. With immobilised photocatalyst 50% reaction is reached in 2.4 mins., while about 6 mins. are necessary to reach the same conversion degree with suspended photocatalyst, in the experimental conditions of this example. As a conclusion, the gain, which may be reached by immobilizing the semiconductor in the membrane structure, is of a factor of about 3 in reaction times. This factor may be further increased if suitable photocatalytic systems, such as those described in example 3, are added to the membrane.
By this way, for example, when ozone is employed, instead of hydrogen peroxide, as oxygen donor, and when 7 wt% of compound (VI) is added to the membrane (see example 3), as photopromoter, the already satisfactory yields of the Table above increase further and remarkably, as the comparison evidences very well.

| Time (minutes) | Percent of non mineralized substrate in the presence of immobilized photocatalyst | Percent of non mineralized substrate in the presence of immobilized photocatalyst, with addition of photopromoter, and by using ozone, instead of hydrogen peroxide, as oxygen donor |
|---|---|---|
| 1.0 | 79 | 35 |
| 2.0 | 61 | 16 |
| 3.0 | 39 | 6.6 |
| 4.0 | 28 | 4.5 |
| 5.0 | 21 | 1.6 |
| 6.0 | 15 | 0.2 |
| 7.0 | 12 | 0.0 |
| 8.0 | 9.5 | 0.0 |
| 10.0 | 3.1 | 0.0 |

### EXAMPLE 9

Photodegradation experiments with a 10 KW pilot plant operating without any kind of membrane or photocatalyst, but only in the presence of two-fold stoichiometric amounts of hydrogen peroxide respect to the substrate to be degraded, the latter being constituted by 0.001 molar solution of 2,6-dimethylphenol.

In this example degradation was studied in the presence of non catalyzed hydrogen peroxide, in the absence of any semiconductor or photocatalytic systems, in order to assess the relative importance of this oxidising agent during the photodegradation, in the same operating conditions of pilot plant, as employed in runs of example 8, and with the same substrate of this example. Percent of substrate in solution as a function of time, during photodegradation, is given by the following Table.

| Time (minutes) | Percent of non-photodegraded substrate |
|---|---|
| 1.0 | 92 |
| 2.0 | 83 |
| 3.0 | 84 |
| 4.0 | 77 |
| 5.0 | 71 |
| 6.0 | 69 |
| 8.0 | 62 |
| 10.0 | 59 |

Photodegradation, in the conditions of this example, is mainly given by photolysis, which is enhanced by the presence of the oxidising agent. It is not, anyway, a process leading to complete oxidation of substrate, as the disappearance of 2, 6-dimethylphenol reported in the preceding Table, was not accompanied by a corresponding disappearance of total organic carbon. As a matter of fact, when disappearance of substrate was about 50% (after about 10 minutes), disappearance of total organic carbon was only 9%, denoting that substrate was converted by photolytic oxidation into other compounds and not integrally into carbon dioxide and water, as was ascertained in all of the other experiments carried out in the presence of titanium dioxide immobilized in the membrane structure. As a conclusion, even if a certain degradation action of non-catalysed hydrogen peroxide in the presence of the UV radiation field of pilot plant may be accounted for, its contribution to integral degradation, leading to complete destruction of organic compound, amounts to no more than about 10-15% of the degradation rate observed in the presence of the photocatalytic membranes, in the conditions of the pilot plant itself. A different behaviour, on the contrary, is offered when hydrogen peroxide is employed in the presence of photocatalytic membranes, since, in this case, it is the action of immobilised photocatalyst which gives rise to its decomposition into hydroxyl radicals, these latter contributing efficiently to the photodegradation process. The satisfactory performance of industrial operating conditions is thus entirely or almost entirely given by the photocatalytic membranes, as well as by the photocatalytic systems, which are the object of the present invention.

## Claims

1. Microporous photocatalytic membrane, suitable for the photochemical degradation of both organic and inorganic compounds, containing at least one semiconductor/ photocatalyst, at least one photopromoter and at least one photosensitizer and supported on the surface of a metallic and/or glass and/or ceramic and/or polymeric microporous support.

2. Membrane as claimed in claim 1, formed by two layers, the first layer containing at least one semiconductor/ photocatalyst, and the second containing at least one photoinitiator, at least one photopromoter and at least one photosensitizer, the first layer being immobilised on the surface of said microporous support.

3. Membrane as claimed in Claim 1 or 2, wherein said semiconductor / photocatalyst is selected from the group consisting of titanium dioxide, zinc oxide, tin dioxide and cadmium sulfide.

4. Membrane as claimed in Claim 3, wherein said semiconductor/photocatalyst is titanium dioxide.

5. Membrane, as claimed in Claims 1-4, wherein said support is in a compact form.

6. Membrane, as claimed in Claims 1-4, wherein said support is in the form of fibres.

7. Membrane, as claimed in Claim 6, wherein said fibres are full fibres.

8. Membrane, as claimed in Claim 6, wherein said fibres are hollow fibres.

9. Membrane, as claimed in Claims 1-8, wherein said support is made of a material selected from the group consisting of stainless steel, aluminum, titanium and their alloys.

10. Process for the manufacture of a membrane as claimed in Claims 1-9, comprising the following steps:
1) coating on an oxidized metallic support, or a conveniently surface treated glass, and/or ceramic, and/or polymeric support a layer of semiconductor / photocatalyst nanopowder by using CVD (chemical vapour deposition) or plasma technology;
2) incubating the resulting supported layer for 2-36 hours in a controlled atmosphere of oxygen enriched air containing 25-90% oxygen and saturated with water vapour at a temperature in the range 30-90°C;
3) spraying or otherwise depositing on the surface of the supported semiconductor/ photocatalyst layer an organic solvent suspension is, said suspension containing:
a) at least one semiconductor / photocatalyst;
b) at least one photoinitiating system containing at least one photoinitiator and at least one photosensitizer; and
c) at least one photopromoting system, in amounts of at least 0.01 wt% with respect to the amount of semiconductor / photocatalyst; and
4) irradiating in a UV curing unit.

11. Process, as claimed in Claim 10, wherein said oxidized metallic support possess an oxidized layer thickness between 100 and 200 nm.

12. Process, as claimed in Claims 10 or 11, wherein in step 3) the semiconductor / photocatalyst is titanium dioxide, this latter being deposited in amounts corresponding to the range 0.15-150 g/m².

13. Process, as claimed in Claims 10-12, wherein in step 3) the photoinitiating system contains as a photoinitiator an organometallic compound in which the central atom is coordinated to the central atom by at least one element selected from the group consisting of C, N, P, As, Sb, O, S, Se, Te, B and uninegative simple ions such as hydride floride, chloride bromide and iodide.

14. Process, as claimed in Claims 10-13, wherein in step 3) the photoinitiating system is added in an amount ranging from 5 to 6 % with respect to the amount of semiconductor / photocatalyst.

15. Process, as claimed in Claims 10-14, wherein in step 3) the photopromoting system is added in an amount ranging from 7 to 15 wt% with respect to the amount of semiconductor / photocatalyst.

16. Process, as claimed in Claims 10-15, wherein in step 1) the layer of semiconductor / photocatalyst nanopowder has a thickness ranging from 25 to 250 nm.

17. Process, as claimed in Claims 10-16, wherein in step 3) a layer having a thickness ranging from 250 nm to 100 µm is deposited onto the semiconductor/photocatalyst layer.

18. Method for photocatalytically degrading, by UV or visible radiation, organic and inorganic pollutants and/or for inducing self-cleaning properties onto any kind of surface, comprising the use of a photocatalytic membrane as claimed in Claims 1-9 in the presence of atmospheric oxygen or of an oxygen donor.

19. Method as claimed in Claim 18, wherein said oxygen donor is hydrogen peroxide or ozone.

20. Method as claimed in Claims 18 to 19, wherein the radiation source is a lamp emitting UV or UV and visible radiation selected from the group consisting of fluorescent lamps, mercury vapour, doped mercury vapour arc lamps, halogen lamps and solar lamps.

21. Method as claimed in Claims 18 to 20, in which the radiation source is the solar energy.

22. Method as claimed in Claims 18 to 21, for the production of drinking water, from natural water provisions, and ultra pure water (down to 0.1 ppb of TOC).

23. Method as claimed in Claims 18 to 21, for the photomineralization or photodegradation of organic micro- or macropollutants in waste waters.

24. Method as claimed in Claims 18 to 21, for the partial photodegradation of micro- or macropollutants in waste waters the partial photodegradation in order to induce their integral biodegradability in waters containing toxic, non biodegradable compounds.

25. Method as claimed in Claims 22 to 24, used in combination with any other, chemical, physico-chemical, or biological treatment process suitable to remove or degrade pollutants.

26. Method as claimed in Claim 25, wherein said biological treatment process is that of an active sludge plant.

27. Method as claimed in Claim 25, wherein said treatment process makes use of composite polymeric photocatalytic membranes.

28. Method as claimed in Claim 25, wherein the treatment process makes also use of composite polymeric membranes, immobilizing reagents, and/or sorbents, these membranes being manufactured by photografting, and photopolymerization.

29. Method as claimed in Claims 18 to 21, intended to photomineralize organic pollutants, or to degrade inorganic pollutants, in air and/or in gaseous emissions.

30. Method as claimed in Claim 29, used in combination with any other, chemical, or physico-chemical treatment process.

31. Photoreactor using a photocatalytic membrane as claimed in Claims 1-9, wherein a turbulent flow, with high Reynolds numbers, is maintained, by suitable circulation pumps, and/or ultrasonically.
